# EUROPEAN PATENT SPECIFICATION

(11) **EP 1 371 443 B1**
(45) Date of publication and mention of the grant of the patent: **04.01.2006**
(21) Application number: 03009130.0
(22) Date of filing: 22.04.2003
(51) Int. Cl.: B23K 26/03, B23K 26/20, G01N 21/84, G01N 21/71, G01N 25/72

(54) **A system and method for monitoring laser welds and giving an indication of the quality of welding**
Vorrichtung und Verfahren zur Überwachung des Laserschweissens und zum Geben eines Schweissqualitätsstatutes
Dispositif et méthode pour contrôler des soudures laser et pour indiquer la qualité de ces soudures

(30) Priority: 14.06.2002 IT TO20020508
(43) Date of publication of application: 17.12.2003
(73) Proprietor: C.R.F. Società Consortile per Azioni, 10043 Orbassano (Torino) (IT)
(72) Inventor: Alippi, Cesare, Strada Torino 50, 10043 Orbassano Torino (IT); D'Angelo, Giuseppe, 10095 Grugliasco (Torino) (IT); Matteucci, Matteo, Strada Torino 50, 10043 Orbassano Torino (IT); Pasquettaz, Giorgio, 13100 Vercelli (IT); Piuri, Vincenzo, Strada Torino 50, 10043 Orbassano Torino (IT); Scotti, Fabio, Strada Torino 50, 10043 Orbassano Torino (IT)
(74) Representative: Notaro, Giancarlo

(56) References cited:
- EP-A- 1 275 465
- EP-A- 1 361 501
- WO-A-00/41837
- AT-B- 399 117
- US-A- 4 865 448
- US-A- 5 728 992
- US-B1- 6 399 915
- ZIMMERMANN K ET AL: "ASPECTS OF QUALITY ASSURANCE WITH A PLASMA-MONITORING SYSTEM DURINGLASER BEAM WELDING" LASER IN DER TECHNIK: VORTRAEGE DES INTERNATIONALES KONGRESSES LASER. LASER IN ENGINEERING, XX, XX, 1994, pages 503-510, XP000607667

## Description

The subject of the present invention is a system and a method for monitoring laser welds according to the preambles of, respectively, claims 1 and 13 (see, for example, the article "Aspects of quality assurance with plasma monitoring system during laser beam welding" by K. ZIMMERMANN et al, in LASER IN DER TECHNIK, 1994, pp 503-510).

Prompt detection of defects in industrial processes has become crucial on account of its impact on the analysis of product quality, as well as on the industrial process itself. Automated laser welding has in recent years witnessed an increasing diffusion in particular on account of its versatility, which enables joins to be made between metals or non-metals at a high speed, with a relatively low supply of heat. Laser technology makes possible the production of welds in an open-air environment, or in vacuum conditions, or in a controlled atmosphere, or again in pressurized chambers, with a highly automated and reliable process. In addition, a laser beam can be focused on very small areas. In general, the analysis of the quality of the process is entrusted to off-line visual inspection of each welded component. Said inspection step constitutes an activity which involves considerable waste of time and which rarely provides the operator with useful indications on how the process itself may be perfected, for example by refining some of its parameters. In addition, external visual inspection of the welded products entails a costly procedure, which is more often than not carried out using ultrasound devices. A different approach consists in providing for an on-line analysis of quality performed directly during the process. The systems of this type so far produced are, however, able to identify only some of the possible welding defects, and moreover in a way that is rather unsatisfactory, as well as being somewhat insensitive to the different set-ups of the laser device. A further drawback of currently available systems lies in the fact that they are based upon reference signals indicating an optimal process or, in some cases, a process presenting defects, and compare the signal associated to the actual process with the aforesaid specially constructed reference signals. The major problem of such systems is that they involve the use of a number of reference signals which ranges from a minimum of two to more than ten. The preparation of such reference signals poses various problems. In the first place, preparing a certain number of repeatable references entails the presence of a skilled operator who is able to certify the goodness of the process. In addition, for certain applications, the creation of even just two references leads to a waste of material. Finally, there is the difficulty of obtaining references associated to a process that presents defects.

In order to understand the purposes and characteristics of the present invention, it is first necessary to make a number of basic considerations on the characteristics of a laser-welding process.

The phenomenon of welding may be defined as the localized coalescence of metals or non-metals produced by heat and/or pressure. A laser beam can be focused in very small areas. The concentration of power enables the welding process to be achieved. Since a laser beam is a beam made up of light radiation, the reflecting properties of the metals determine which part of the beam is to be reflected, so that even a large part of the incident power can bounce back. This problem is increased by the fact that the majority of industrial lasers emit infrared light, which is reflected by metals even better than is visible light. This situation changes drastically when the surface of the structure subjected to welding starts to melt. The liquid metals absorb much more power from the incident radiation as compared to solid metals, so that the flow of heat absorbed increases suddenly, thus raising the temperature of the metal above the boiling point and generating metal vapour. The pressure of this vapour opens a narrow and deep channel around the laser beam, so forming a melted area having a keyhole-like profile (the so-called "keyhole"). The ratio between the depth and width of the laser-welding areas shaped like a keyhole may reach values of up to 10:1 but is more commonly in the region of 4:1. Keyhole welding is a threshold process: when the incident radiation is low, little power is absorbed; once the radiation becomes high enough to form a keyhole, the majority of the power is absorbed by the welded component. Small variations of power in the proximity of the threshold of the keyhole cause very considerable changes in the quality of the weld.

Laser devices have the appreciable property of producing thin and deep welds, so that it is common to adopt a butt-welding configuration. Said configuration makes possible a high welding speed and requires a low supply of heat since all the metal of the weld is used in the joint. Also irrespective of said configuration, in laser welding the correct coupling of the elements to be welded in the area of the joint is critical. Almost all laser welds are autogenous; i.e., no weld material is used. Any space left in the area of the joint can become a void in the welded product obtained. Even assuming that the voids are acceptable, it should be considered that a focused laser beam can pass through a butt joint in which a space of 0.2 mm has been left without causing any welding. The beam simply bounces off the facing walls of the elements to be welded and exits on the opposite side.

Furthermore, the material to be welded must be clean. Any non-metallic contaminant is ejected from the keyhole, producing splashes, porosities and the risk of damage to the focusing optical devices.

From document US-B1-6 399 915 it is known a method for monitoring weld quality measuring the radiation emitted by the weld pool, that also measures the reflected laser radiation through two photodiodes placed at different angles. The method also provides for analyzing the DC or low frequency component and the high frequency component of the sensor signals as a a function of different parameters. The quality of the weld is established on the basis of parameters extracted from such signals.

The process according to the invention is aimed at detecting in particular the following defects of the laser weld:
- insufficient depth of penetration;
- misalignments of the coupling during assembly of the pieces;
- presence of porosities;
- reductions in the level of power of the laser source; and
- drops in power of the laser source.

The purpose of the present invention is to provide a monitoring system and method which will be able to recognize accurately all the aforesaid defects through a process which can be carried out also on line and in real time.
In order to achieve the above purpose, the subject of the invention is a system and a method for monitoring laser welds as defined in claims 1 and 13 respectively.

The invention will now be described with reference to the annexed drawings, which are provided purely by way of non-limiting example and in which:
- Figure 1 illustrates a diagram of an embodiment of the system according to the invention;
- Figure 2 is a block diagram which indicates the main steps of the method according to the invention;
- Figures 3, 4 and 5 illustrate diagrams which show the characteristics of the signals at output from the sensor means of the system according to the invention; and
- Figure 6 is a more detailed block diagram illustrating a preferred mode of embodiment of the method according to the invention.

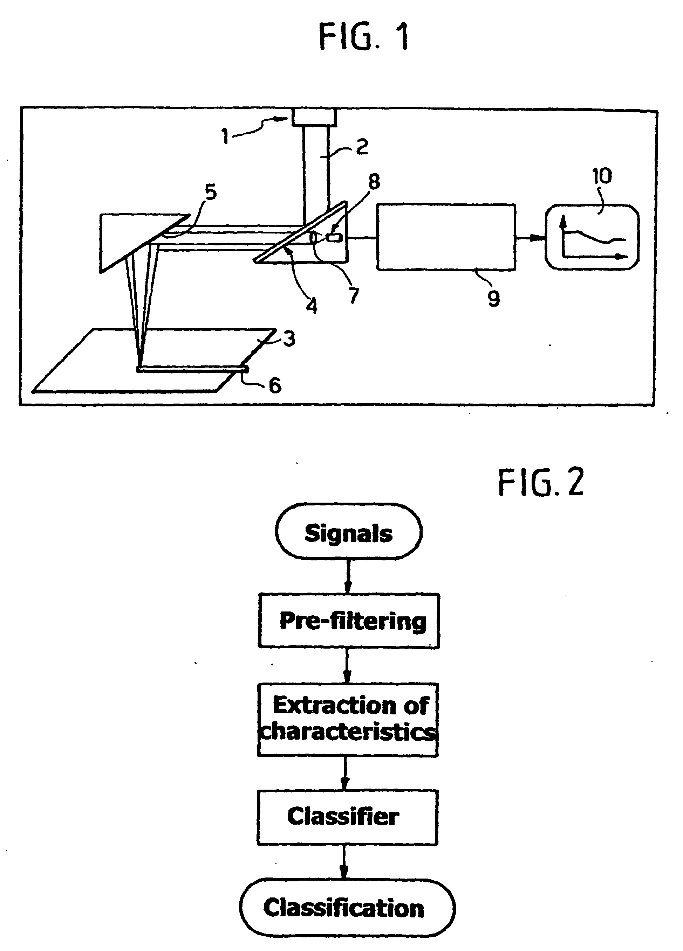

In Figure 1, the reference number 1 designates the head of a focusing laser (illustrated only schematically), which focuses a laser beam 2 on a structure to be welded 3, for example by means of two successive reflections from a half-silvered mirror 4 and a conventional mirror 5. There is envisaged a relative movement of the focusing system with respect to the structure 3, for example in order to create a welding line 6. In a preferred embodiment, the half-silvered mirror 4 is a zinc-selenium mirror with an absorption of 0.2%. The radiation reflected by the structure 3 undergoing welding is again reflected by the mirror 5 towards the half-silvered mirror 4, passes through the latter and is focused by a filtering lens 7 on a photodiode sensor 8. The signal at output from the sensor 8 is sent to an electronic processing unit 9, which displays at one output 10 the quality of the weld. The processing unit 9 can comprise, for example, a data-acquisition card, of the NI 6110E PC card type, with an acquisition frequency of 5 Msamples per sec, as well as a plurality of personal computers, for example of the 800-MHz Pentium III type. Analysis of the quality of the weld obtained using the system according to the invention is based not only upon the signal at output from the photodiode 8, which is linked to the radiation produced by the welding process and comes from the structure to be welded, but also upon the signal indicating the grid current of the laser, which is linked to the power of the laser and which also comes from the component welded. The grid-current signal is used for identifying reductions in the level of power of the laser source and drops in power of the laser source. The signal coming from the photodiode is used for identifying possible defects, such as insufficient depth of penetration, misalignments in the coupling of the pieces, or porosities.

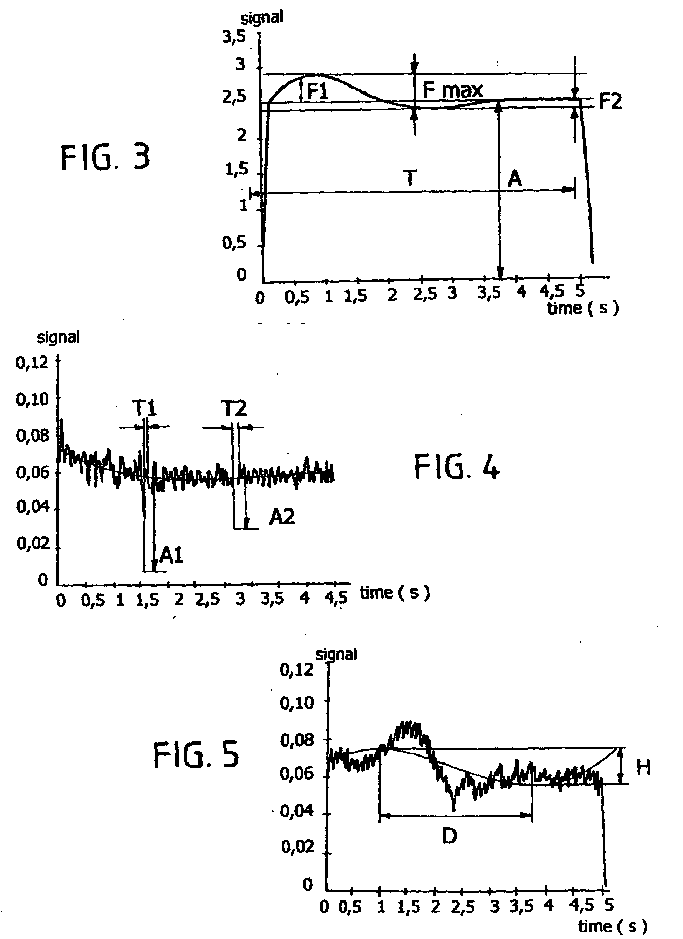

As may be seen in Figure 2, the first step of the procedure of processing downstream of sampling of the signals is a lowpass pre-filtering step, necessary for reducing the high-frequency noise typically present in the industrial context. The appropriate filtering frequency is established by means of a spectral analysis, which identifies the higher-frequency components of the signals. Subsequently, an operation of down-sampling is carried out in order to reduce the cardinality of the set of data, with the intent of speeding up the operation of extraction of the characteristics of the signals and the subsequent classification. The ratio of down-sampling is identified downstream, after prior definition of a maximum tolerable limit for the execution of the procedure. On the signal filtered and appropriately decimated it is necessary to extract a set of characteristics, which, by describing in a compact way the nature of the process, will enable resolution of the application of analysis of the quality of the weld. The step of extraction of the characteristics from the signals is based upon generation of a function that interpolates the signal and subsequent extraction of appropriate indices of deviation. Examples of index of deviation extracted from the signals involved in the process in question are:
- for the power signal (Figure 3) :
   - mean intensity A and duration T of the useful part of the signal,
   - maximum positive deviation F₁ and maximum negative deviation F₂ per signal with respect to its mean value,
   - fluctuation of maximum power during welding Fₘₐₓ;
- for the signal of the photodiode (Figures 4 and 5) :
   - mean intensity and variance;
- time durations Tᵢ and corresponding amplitudes Aᵢ of the main deviations between signal and interpolated reference signal;
- differences between the co-ordinates of the minimum and of the maximum taken on the interpolating curve: characteristic D and H.

The final step of the algorithm entails the construction of a classifier, which, by receiving at input the characteristics identified (or a subset thereof) evaluates the quality of the weld as: "correct" / "incorrect" / "insufficient penetration" / "discontinuous laser power" / "incorrect assembly" / "porosity".

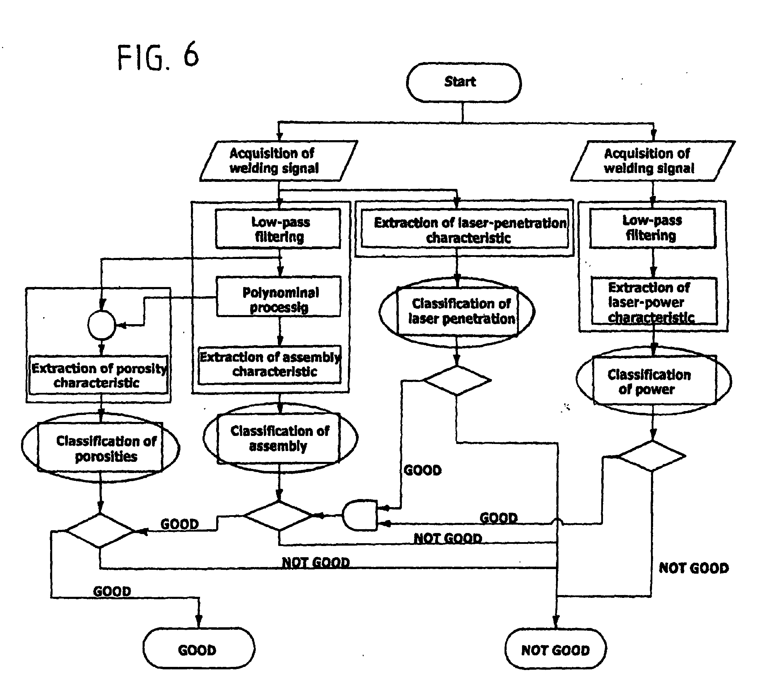

The structure of the classification algorithm is shown in Figure 6. The algorithm is based upon a hierarchical approach for detecting welding defects as soon as possible. The rectangular boxes refer to activities of signal treatment where techniques of extraction of the characteristics are applied, whilst the blocks highlighted by an elliptical outline represent classification modules. The classifications of the power signal and of the depth of penetration are made independently, and only after their processing is the detection of the errors of assembly made. If a sample is classified as "correctly assembled", there can then be activated the subsequent module for monitoring the possible presence of porosities. Once the important characteristics have been identified, the next step is to develop the classifier, which, by processing the characteristics, implements the final quality analysis. Possible techniques of classification that may be used include the so-called "k-nearest neighbour rule" (see, for example, B. D. Ripley, "Pattern Recognition and Neural Networks", Cambridge University Press, 1996) or neural networks of the "feed-forward" type.

Of course, without prejudice to the principle of the invention, the details of construction and the embodiments may vary widely with respect to what is described and illustrated herein purely by way of example, without thereby departing from the scope of the present invention as defined in the appended claims.

## Claims

1. A system for monitoring laser welds, comprising:
- laser-welding means (1, 4, 5), for focusing a laser beam (2) on a structure (3) to be welded;
- sensor means (8), designed for detecting the radiation produced in the welding area and for emitting signals indicating said radiation;
means for emitting signals linked to the power of the laser beam; and
- processing means (9) for processing the aforesaid signals at output from said sensor means (8) and said means for emitting signals linked to the power of the laser beam, said processing means (9) being provided for:
- extracting given quality characteristics of the signal coming from the sensor means (8) by means of generation of a function that interpolates the signal and subsequent extraction of indices of deviation of the signal with respect to the interpolating function; and
- classifying the quality characteristics extracted, giving an indication of the quality of the weld:
**characterized in that**
said means for emitting signals linked to the power of the laser beam exploit the grid current of the laser; said processing means (9) are further provided for:
extracting given power characteristics from the signals linked to the power of the laser beam by means of generation of a function interpolating the signal and subsequent extraction of indices of deviation of the signal with respect to the interpolating function, wherein the extracting and classifying steps of the signal, to give an indication of the quality of the weld, are performed in the following hierarchical way:
i- extracting and classifying in an independant way the power signal;
ii- extracting and classifying in an independant way the depth of penetration based on the welding signal, and comparing this result with the result of the classification of the power signal;
iii- filtering, processing, extracting and classifying the assembly and comparing this result with the result of the previous comparison achieved in steps i- and ii-;
iv- filtering, processing, extracting and classifying the porosities and comparing this result with the result of the previous comparison achieved in step iii-;
v- producing a final statement on the weld quality according to the result of the comparison steps achieved in step iv-.

2. The system according to Claim 1, **characterized in that** it comprises a lowpass filter for filtering the signal emitted by the sensor means prior to its processing.

3. The system according to Claim 1, **characterized in that** the processing means (9) are designed for executing a down-sampling operation.

4. The system according to Claim 1, **characterized in that** the aforesaid processing means (9) are designed for filtering one or more indices of deviation from the signal indicating the power of the laser beam, chosen from among: mean intensity (A) and duration (T) of the useful part of the signal, maximum positive deviation (F₁) and maximum negative deviation (F₂) of the signal with respect to its mean value, and fluctuation of maximum power during the weld (Fₘₐₓ).

5. The system according to Claim 1, **characterized in that** said processing means are designed for extracting one or more indices of deviation from the signal emitted by the aforesaid sensor means (8) and indicating the characteristics of the radiation reflected by the structure being welded, chosen from among: mean intensity and variance, time durations (Tᵢ) and corresponding amplitudes (Aᵢ) of the principal deviations between signal and interpolated reference signal, and differences between the co-ordinates of the minimum and of the maximum taken on the interpolating curve (characteristics D and H).

6. The system according to Claim 1, **characterized in that** the laser-welding means comprise: a focusing head (1); and an optical system for directing the laser beam focused on the component to be welded, which includes a half-silvered mirror (4), which has the purpose of reflecting, in the direction of the structure that is to be welded, the laser beam coming from the focusing head (1), of receiving in return the radiation reflected from the structure being welded, and of transmitting said radiation (which passes through the half-silvered mirror (4) itself) to the aforesaid sensor means (8), said sensor means (8) being set behind the aforesaid half-silvered mirror (4).

7. The system according to Claim 6, **characterized in that** the aforesaid sensor means are formed by a photodiode (8).

8. The system according to Claim 7, **characterized in that** the half-silvered mirror (4) consists of a zinc-selenium optical element.

9. The system according to Claim B, **characterized in that** the half-silvered mirror has a factor of absorption equal to approximately 0-2%.

10. The system according to Claim 7, **characterized in that** the aforesaid photodiode (8) has a spectral response substantially equal to 190-1100 nm.

11. The system according to Claim 10, **characterized in that** between the half-silvered mirror (4) and the photodiode (9) is interposed an optical filter (7), which has an optical band substantially comprised between 200 nm and 405 nm for selection of the radiation coming from the structure being welded.

12. The system according to Claim 1, **characterized in that** the aforesaid processing means (9) comprise an NI 6110E data-acquisition PC card, with frequencies of acquisition of 5 Msamples per sec, as well as a plurality of personal computers.

13. A method for monitoring laser welds, comprising the steps of:
- focusing a laser beam (2) on a structure (3) to be welded;
- detecting the radiation produced in the welding area and generating signals indicating said radiation; and
- emitting signals linked to the power of the laser beam
- processing the aforesaid signals,
- extracting given quality characteristics of the aforesaid signal by means of generation of a function that interpolates the signal, and subsequent extraction of indices of deviation of the signal with respect to the interpolating function; and
- classifying the characteristics extracted, giving an indication of the quality of the weld.
**characterized in that**
said emitting signals linked to the power of the laser beam includes exploiting the grid current of the laser; and
said processing further includes:
extracting given power characteristics from the signals linked to the laser beam power by means of generation of a function interpolating the signal and subsequent extraction of indices of deviation of the signal with respect to the interpolating function wherein the extracting and classifying steps of the signal, to give an indication of the quality of the weld, are performed in the following hierarchical way:
i- extracting and classifying in an independant way the power signal;
ii- extracting and classifying in an independant way the depth of penetration based on the welding signal, and comparing this result with the result of the classification of the power signal;
iii- filtering, processing, extracting and classifying the assembly and comparing this result with the result of the previous comparison achieved in steps i- and ii-;
iv- filtering, processing, extracting and classifying the porosities and comparing this result with the result of the previous comparison achieved in step iii-;
v- producing a final statement on the weld quality according to the result of the comparison steps achieved in step iv-;

14. The method according to Claim 13, **characterized in that** the aforesaid signal is pre-filtered before being processed.

15. The method according to Claim 13, **characterized in that**, before the processing of the aforesaid signal, there is performed the operation of down-sampling.

16. The method according to Claim 13, **characterized in that** one or more indices of deviation of the signal indicating the power of the laser beam are extracted, chosen from among: mean intensity (A) and duration (T) of the useful part of the signal, maximum positive deviation (F₁) and maximum negative deviation (F₂) of the signal with respect to its mean value, maximum power fluctuation during welding (Fₘₐₓ).

17. The method according to Claim 13, **characterized in that** one or more indices of deviation of the signal indicating the characteristics of the reflected radiation are extracted, chosen from among: mean intensity and variance, time durations (Tᵢ) and corresponding amplitudes (Aᵢ) of the main deviations between signal and interpolated reference signal, differences between the co-ordinates of the minimum and the maximum taken on the interpolating curve (characteristics D and H).

18. The method according to Claim 13, **characterized in that** said quality characteristics and power characteristic classifiying operations are included in a final step of construction of a classifier for supplying at output further indications of the quality of the weld, for example chosen from among: correct weld, incorrect weld, discontinuous laser power, incorrect assembly of the elements to be welded.

## Patentansprüche

1. System zum Monitoren von Laserschweißungen, umfassend:
- Laserschweißmittel (1, 4, 5) zum Fokussieren eines Laserstrahls (2) auf eine Struktur (3), die zu schweißen ist;
- Sensormittel (8), ausgelegt zum Erfassen der Strahlung, die im Schweißgebiet produziert wird, und zum Emittieren von Signalen, die die Strahlung anzeigen;
- Mittel zum Emittieren von Signalen, die im Zusammenhang mit der Leistung des Laserstrahls stehen; und
- Verarbeitungsmittel (9) zum Verarbeiten der vorgenannten Signale am Ausgang der Sensormittel (8) und der Mittel zum Emittieren von Signalen, die im Zusammenhang mit der Leistung des Laserstrahls stehen, die Verarbeitungsmittel (9) sind vorgesehen für:
- das Extrahieren von gegebenen Qualitätseigenschaften des Signals, das von den Sensormitteln (8) kommt, mittels der Erzeugung einer Funktion, die das Signal interpoliert und darauf folgende Extraktion von Kennziffern von Abweichung des Signals mit Bezug auf die interpolierte Funktion; und
- Klassifizierung der extrahierten Qualitätseigenschaften, gebend einen Hinweis der Qualität der Schweißung;
**dadurch gekennzeichnet, dass**
die Mittel zum Emittieren von Signalen, die im Zusammenhang mit der Leistung des Laserstrahls stehen, den Gitterstrom des Lasers verwerten, die Verarbeitungsmittel (9) sind weiter vorgesehen für:
das Extrahieren gegebener Leistungseigenschaften von den Signalen, die im Zusammenhang mit der Leistung des Laserstrahls stehen, mittels Erzeugung einer Funktion, die das Signal interpoliert, und darauf folgende Extraktion von Kennziffern der Abweichung des Signals mit Bezug auf die interpolierte Funktion, worin die Extraktions- und Klassifikationsschritte des Signals, um einen Hinweis auf die Qualifikation der Schweißung zu geben, auf dem folgenden hierarchischen Weg ausgeführt werden:
i) Extrahieren und Klassifizieren des Leistungssignals in einer unabhängigen Weise;
ii) Extrahieren und Klassifizieren der Eindringtiefe in einer unabhängigen Weise basierend auf dem Schweißsignal, und Vergleichen dieses Resultats mit dem Resultat der Klassifikation des Leistungssignals;
iii) Filtern, Verarbeiten, Extrahieren und Klassifizieren der Anordnung und Vergleichen dieses Resultats mit dem Resultat des vorherigen Vergleichs, erhalten in Schritten i) und ii);
iv) Filtern, Verarbeiten, Extrahieren und Klassifizieren der Porosität und Vergleichen dieses Resultats mit dem Resultat des vorherigen Vergleichs, erhalten im Schritt iii);
v) Produzieren einer finalen Aussage über die Schweißungsqualität gemäß dem Resultat der Vergleichsschritte, erhalten in Schritt iv).

2. System nach Anspruch 1, **dadurch gekennzeichnet, dass** es ein Tiefpassfilter umfasst zum Filtern des Signals, das durch die Sensormittel initiiert wird vor seiner Verarbeitung.

3. System nach Anspruch 1, **dadurch gekennzeichnet, dass** die Verarbeitungsmittel (9) ausgelegt sind zum Ausführen einer Dezimierungsoperation.

4. System nach Anspruch 1, **dadurch gekennzeichnet, dass** die vorgenannten Verarbeitungsmittel (9) ausgelegt sind zum Filtern einer oder mehrerer Kennziffern der Abweichung von dem Signal, das die Leistung des Laserstrahls anzeigt, ausgewählt unter: mittlere Intensität (A) und Dauer (T) des nutzvollen Teils des Signals, maximale positive Abweichung (F₁) und maximale negative Abweichung (F₂) des Signals mit Bezug auf seinen Mittelwert, und Fluktuation der mittleren Leistung während der Schweißung (Fₘₐₓ).

5. System nach Anspruch 1, **dadurch gekennzeichnet, dass** die Verarbeitungsmittel ausgelegt sind zum Extrahieren einer oder mehrerer Kennziffern der Abweichung von dem Signal, das durch die vorgenannten Sensormittel (8) emittiert wird, und Anzeigen der Eigenschaften der Strahlung, die durch die zu schweißende Struktur reflektiert wird, ausgewählt unter: mittlere Intensität und Varianz, Zeitdauern (Tᵢ) und jeweiligen Amplituden (Aᵢ) der prinzipiellen Abweichungen zwischen Signal und interpoliertem Referenzsignal, und Differenzen zwischen den Koordinaten des Minimums und des Maximums, genommen auf der interpolierten Kurve (Eigenschaften D und H).

6. System nach Anspruch 1, **dadurch gekennzeichnet, dass** die Laserschweißmittel umfassen: einen Fokussierkopf (1); und ein optisches System zum Ausrichten des Laserstrahls, der auf die zu schweißende Komponente fokussiert ist, das einen halbtransparenten Spiegel (4) einschließt, der die Aufgabe der Reflexion hat, in der Richtung der Struktur, die zu schweißen ist, des Laserstrahls, der vom Fokussierkopf (1) kommt, im Gegenzug des Empfangens der Strahlung, die von der zu schweißenden Struktur reflektiert wird, und des Transmittierens der Strahlung (die durch den halbtransparenten Spiegel (4) selber passiert) zu den vorgenannten Sensormitteln (8), die Sensormittel (8) sind hinter dem vorgenannten halbtransparenten Spiegel (4) eingerichtet.

7. System nach Anspruch 6, **dadurch gekennzeichnet, dass** die vorgenannten Sensormittel durch eine Fotodiode (8) gebildet werden.

8. System nach Anspruch 7, **dadurch gekennzeichnet, dass** der halbtransparente Spiegel (4) aus einem Zinkselen-optischen Element besteht.

9. System nach Anspruch 8, **dadurch gekennzeichnet, dass** der halbtransparente Spiegel einen Absorptionsfalctor ungefähr gleich 0,2% aufweist.

10. System nach Anspruch 7, **dadurch gekennzeichnet, dass** die vorgenannte Fotodiode (8) eine Spektralempfindlichkeit im Wesentlichen gleich 190 bis 1100 nm aufweist.

11. System nach Anspruch 10, **dadurch gekennzeichnet, dass** zwischen dem halbtransparenten Spiegel (4) und der Fotodiode (8) ein optisches Filter (7) eingefügt ist, das ein optisches Band aufweist, das im Wesentlichen umfasst ist zwischen 200 nm und 405 nm zur Selektion der Strahlung, die von der Struktur kommt, die geschweißt wird.

12. System nach Anspruch 1, **dadurch gekennzeichnet, dass** die vorgenannten Verarbeitungsmittel (9) eine NI 6110E-Datenerfassungs-PC-Karte umfassen, mit Frequenzen der Erfassung von 5 MAbtastungen/s [Msamples per second], wie auch eine Mehrzahl von Personal Computern.

13. Verfahren zum Monitoren von Laserschweißungen, umfassend die Schritte von:
- Fokussieren eines Laserstrahls (2) auf eine Struktur (3), die zu schweißen ist;
- Erfassung der Strahlung, die in dem Schweißgebiet produziert wird, und Erzeugen von Signalen, die die Strahlung anzeigen; und
- Emittieren von Signalen, die im Zusammenhang mit der Leistung des Laserstrahls stehen
- Verarbeiten der vorgenannten Signale,
- Extrahieren gegebener Qualitätseigenschaften des vorgenannten Signals mittels Erzeugung einer Funktion, die das Signal interpoliert, und darauf folgender Extraktion von Kennziffern der Abweichung des Signals mit Bezug auf die interpolierte Funktion; und
- Klassifizierung der extrahierten Eigenschaften, gebend einen Hinweis auf die Qualität der Schweißung;
**dadurch gekennzeichnet, dass**
das emittierte Signal, das im Zusammenhang steht mit der Leistung des Laserstrahls, Verwerten des Gitterstroms des Lasers einschließt; und
das Verarbeiten weiter einschließt:
Extrahieren gegebener Leistungseigenschaften von den Signalen, die im Zusammenhang mit der Laserstrahlleistung stehen, mittels Erzeugung einer Funktion, die das Signal interpoliert, und darauf folgender Extraktion von Kennziffern der Abweichung des Signals mit Bezug auf die interpolierte Funktion, worin die Extraktions- und Klassifikationsschritte des Signals, um einen Hinweis auf die Qualität der Schweißung zu geben, in der folgenden hierarchischen Weise durchgeführt werden:
i) Extrahieren und Klassifizieren des Leistungssignals in einer unabhängigen Weise;
ii) Extrahieren und Klassifizieren der Eindringtiefe in einer unabhängigen Weise basierend auf dem Schweißsignal, und Vergleichen dieses Resultats mit dem Resultat der Klassifikation des Leistungssignals;
iii) Filtern, Verarbeiten, Extrahieren und Klassifizieren der Anordnung und Vergleichen dieses Resultats mit dem Resultat des vorherigen Vergleichs, erhalten in Schritten i) und ii);
iv) Filtern, Verarbeiten, Extrahieren und Klassifizieren der Porosität und Vergleichen dieses Resultats mit dem Resultat des vorherigen Vergleichs, erhalten im Schritt iii);
v) Produzieren einer finalen Aussage über die Schweißungsqualität gemäß dem Resultat der Vergleichsschritte, erhalten in Schritt iv).

14. Verfahren nach Anspruch 13, **dadurch gekennzeichnet, dass** das vorgenannte Signal vorgefiltert wird, bevor es verarbeitet wird.

15. Verfahren nach Anspruch 13, **dadurch gekennzeichnet, dass** vor der Verarbeitung des vorgenannten Signals dort die Operation der Dezimierung durchgeführt wird.

16. Verfahren nach Anspruch 13, **dadurch gekennzeichnet, dass** eine oder mehrere Kennziffern der Abweichung des Signals, das die Leistung des Laserstrahls anzeigt, extrahiert werden, ausgewählt unter: mittlere Intensität (A) und Dauer (T) des nützlichen Teils des Signals, maximale positive Abweichung (F₁) und maximale negative Abweichung (F₂) des Signals mit Bezug auf seinen Mittelwert, und Fluktuation der mittleren Leistung während der Schweißung (Fₘₐₓ).

17. Verfahren nach Anspruch 13, **dadurch gekennzeichnet, dass** eine oder mehrere Kennziffern der Abweichung des Signals, das die Eigenschaften der reflektierten Strahlung anzeigt, extrahiert werden, ausgewählt unter: mittlerer Intensität und Varianz, Zeitdauern (Tᵢ) und jeweiligen Amplituden (Aᵢ) der Hauptabweichungen zwischen Signal und interpoliertem Referenzsignal, Differenzen zwischen den Koordinaten des Minimums und des Maximums, genommen auf der interpolierten Kurve (Eigenschaften D und H).

18. Verfahren nach Anspruch 13, **dadurch gekennzeichnet, dass** die Qualitätseigenschafts- und Leistungseigenschafts-Klassifizierungsoperationen eingeschlossen sind in einem finalen Schritt der Konstruktion eines Klassifizierers zur Lieferung am Ausgang weiterer Hinweise auf die Qualität der Schweißung, z.B. ausgewählt unter: korrekte Schweißung, inkorrekte Schweißung, diskontinuierliche Laserleistung, inkorrekte Anordnung der zu schweißenden Elemente.

## Revendications

1. Système pour contrôler des soudures laser, comprenant :
- des moyens de soudage laser (1,4,5) pour focaliser un faisceau laser (2) sur une structure (3) devant être soudée;
- des moyens formant capteur (8) conçus pour détecter le rayonnement produit dans la zone de soudage et pour émettre des signaux indiquant ledit rayonnement;
- des moyens pour émettre des signaux associés à la puissance du faisceau laser;
- des moyens de traitement (9) pour traiter les signaux mentionnés précédemment à la sortie desdits moyens formant capteur (8) et desdits moyens pour émettre des signaux associés à la puissance du faisceau laser, lesdits moyens de traitement (9) étant prévus pour :
- extraire des caractéristiques de qualité données du signal arrivant des moyens formant capteur (8) au moyen de la production d'une fonction qui interpole le signal et de l'extraction ultérieure d'indices de déviation du signal par rapport à la fonction d'interpolation; et
- classer les caractéristiques de qualité extraites en fournissant une indication de la qualité de la soudure;
**caractérisé en ce que**
lesdits moyens d'émission de signaux associés à la puissance du faisceau laser exploitent le courant de grille du laser; lesdits moyens de traitement (9) étant en outre prévus pour :
extraire des caractéristiques de puissance données à partir des signaux associés à la puissance du faisceau laser au moyen de la production d'une fonction interpolant le signal, et au moyen de l'extraction ultérieure d'indices de déviation du signal par rapport à la fonction d'interpolation, les étapes d'extraction et de classification du signal, servant à fournir une indication de la qualité de soudure, étant exécutées dans l'ordre hiérarchique suivant :
i- extraction et classification, d'une manière indépendante, du signal de puissance;
ii- extraction et classification, d'une manière indépendante, de la profondeur de pénétration sur la base du signal de soudage, et comparaison de ce résultat au résultat de la classification du signal de puissance;
iii- filtrage, traitement, extraction et classification de l'ensemble et comparaison de ce résultat au résultat de la comparaison précédente obtenue lors des étapes i- et ii-;
iv- filtrage, traitement, extraction et classification des porosités et comparaison de ce résultat au résultat de la comparaison précédente obtenue lors de l'étape iii-;
v- production d'une indication finale de la qualité de soudage conformément au résultat des étapes de comparaison obtenu lors de l'étape iv-.

2. Système selon la revendication 1, **caractérisé en ce qu'**il comprend un filtre passe-bas pour le filtrage du signal émis par les moyens formant capteur avant leur traitement.

3. Système selon la revendication 1, **caractérisé en ce que** les moyens de traitement (9) sont agencés de manière à exécuter une opération de sous-échantillonnage.

4. Système selon la revendication 1, **caractérisé en ce que** lesdits moyens de traitement (9) sont conçus de manière à filtrer un ou plusieurs indices de déviation par rapport au signal indiquant la puissance du faisceau laser, choisis parmi : intensité moyenne (A) et durée moyenne (T) de la partie utile du signal, déviation positive maximale (F₁) et déviation négative maximale (F₂) du signal par rapport à sa valeur moyenne, et fluctuation de la puissance maximale pendant le soudage (Fₘₐₓ).

5. Système selon la revendication 1, **caractérisé en ce que** lesdits moyens de traitement sont conçus pour extraire un ou plusieurs indices de déviation par rapport au signal émis par les moyens formant capteur (8) mentionnés précédemment et indiquant les caractéristiques du rayonnement réfléchi par la structure qui est soudée, choisies parmi : intensité moyenne et variance moyenne, durées (Tᵢ) et amplitudes correspondantes (Aᵢ) des déviations principales entre le signal et le signal de référence interpolé, et différences entre les coordonnées du minimum et du maximum, prises sur la courbe d'interpolation (caractéristiques D et H).

6. Système selon la revendication 1, **caractérisé en ce que** les moyens de soudage laser comprennent : une tête de focalisation (1); et un système optique pour diriger le faisceau laser focalisé sur le composant devant être soudé, qui inclut un miroir semi-transparent (4), qui a pour rôle de réfléchir, en direction de la structure qui doit être soudée, le faisceau laser arrivant de la tête de focalisation (1), de recevoir en retour le rayonnement réfléchi par la structure qui est soudée, et transmettre ledit rayonnement (qui traverse le miroir semi-transparent (4) lui-même) en direction des moyens formant capteur (8) mentionnés précédemment, lesdits moyens formant capteur (8) étant disposés en arrière du miroir semi-transparent (4) mentionné précédemment.

7. Système selon la revendication 6, **caractérisé en ce que** les moyens formant capteurs mentionnés précédemment sont formés par une photodiode (8).

8. Système selon la revendication 7, **caractérisé en ce que** le miroir semi-transparent (4) est constitué par un élément optique au zinc-sélénium.

9. Système selon la revendication 8, **caractérisé en ce que** le miroir semi-transparent possède un facteur d'absorption égal à environ 0,2 %.

10. Système selon la revendication 7, **caractérisé en ce que** la photodiode mentionnée précédemment (8) possède une réponse spectrale sensiblement égale à 190-1100 nm.

11. Système selon la revendication 10, **caractérisé en ce qu'**entre le miroir semi-transparent (4) et la photodiode (8) est intercalé un filtre optique (7) qui possède une bande optique sensiblement comprise entre 200 nm et 405 nm pour la sélection du rayonnement arrivant de la structure qui est en cours de soudage.

12. Système selon la revendication 1, **caractérisé en ce que** les moyens de traitement (9) mentionnés précédemment comprennent une carte PC d'acquisition de données NI 6110E, avec des fréquences d'acquisition de 5 M.échantillons par seconde, ainsi qu'une pluralité d'ordinateurs personnels.

13. Procédé pour le contrôle de soudures laser comprenant les étapes consistant à :
- focaliser un faisceau laser (2) sur une structure (3) devant être soudée;
- détecter le rayonnement produit dans la zone de soudage et générer des signaux indiquant ledit rayonnement; et
- émettre des signaux associés à la puissance du faisceau laser,
- traiter les signaux mentionnés précédemment,
- extraire des caractéristiques de qualité données du signal mentionné précédemment au moyen de la production d'une fonction qui interpole le signal, et extraction ultérieure d'indices de déviation du signal par rapport à la fonction d'interpolation; et
- classer les caractéristiques extraites, en obtenant une indication de la qualité de la soudure,
**caractérisé en ce que**
lesdits signaux d'émission associés à la puissance du faisceau laser incluent l'exploitation du courant de grille du laser; et
ledit traitement inclut en outre :
l'extraction des caractéristiques de puissance données à partir des signaux associés à la puissance du faisceau laser au moyen de la production d'une fonction interpolant le signal, et l'extraction ultérieure d'indices de déviation du signal par rapport à la fonction d'interpolation, les étapes d'extraction et de classification du signal, servant à fournir une indication de la qualité de soudure, étant exécutées dans l'ordre hiérarchique suivant :
i- extraction et classification, d'une manière indépendante, du signal de puissance;
ii- extraction et classification, d'une manière indépendante, de la profondeur de pénétration sur la base du signal de soudage, et comparaison de ce résultat au résultat de la classification du signal de puissance;
iii- filtrage, traitement, extraction et classification de l'ensemble et comparaison de ce résultat au résultat de la comparaison précédente obtenue lors des étapes
i- et ii-;
iv- filtrage, traitement, extraction et classification des porosités et comparaison de ce résultat au résultat de la comparaison précédente obtenue lors de l'étape iii-;
v- production d'une indication finale de la qualité de soudage conformément au résultat des étapes de comparaison obtenu lors de l'étape iv-.

14. Procédé selon la revendication 13, **caractérisé en ce que** le signal mentionné précédemment est préalablement filtré avant d'être traité.

15. Procédé selon la revendication 13, **caractérisé en ce qu'**avant le traitement du signal mentionné précédemment, l'opération de sous-échantillonnage est exécutée.

16. Procédé selon la revendication 13, **caractérisé en ce qu'**un ou plusieurs indices de déviation du signal indiquant la puissance du faisceau laser sont extraits, en étant choisis parmi : intensité moyenne (A) et durée moyenne (T) de la partie utile du signal, déviation positive maximale (F₁) et déviation négative maximale (F₂) du signal par rapport à sa valeur moyenne, et fluctuation de la puissance maximale pendant le soudage (Fₘₐₓ).

17. Procédé selon la revendication 13, **caractérisé en ce qu'**un ou plusieurs indices de déviation du signal indiquant les caractéristiques du rayonnement réfléchi sont extraits, en étant choisis parmi : intensité moyenne et variance moyenne, durées (Tᵢ) et amplitudes correspondantes (Aᵢ) des déviations principales entre le signal et le signal de référence interpolé, et différences entre les coordonnées du minimum et du maximum, prises sur la courbe d'interpolation (caractéristiques D et H).

18. Procédé selon la revendication 13, **caractérisé en ce que** lesdites caractéristiques de qualité et les opérations de classification de caractéristiques de puissance sont incluses dans une étape finale de construction d'un système de classification pour délivrer en outre, à la sortie, des indications de la qualité de la soudure, par exemple choisies parmi : une soudure correcte, une soudure incorrecte, une puissance discontinue du laser, un assemblage incorrect des éléments devant être soudés.
